# EUROPEAN PATENT APPLICATION

(11) **EP 1 605 408 A1**
(43) Date of publication of application: **14.12.2005**
(21) Application number: 04013784.6
(22) Date of filing: 11.06.2004
(51) Int. Cl.: G06T 15/00

(54) **Image-based rendering (IBR)**

(71) Applicant: SAAB AB, 581 88 Linköping (SE)
(72) Inventor: Moden, Anders, 571 92 Nässjö (SE); Johansson, Lisa, 302 37 Halmstad (SE)

(57) **Abstract**

The present invention relates to computer production of images. Three-dimensional graphics data (D_{3D}) is automatically rendered by means of a GPU (330), which is adapted to receive two-dimensional image data. This data contains a number of image points, which each is associated with color information (r, g, b), transparency information (a), and depth buffer data (Z) that for each of the image points specifies a distance between a projection plane and a point of a reproduced object in the scene. A buffer unit (320) storing the image data is directly accessible by the GPU (330). The GPU (330), in turn, includes a texture module (331), a vertex module (332) and a fragment module (333). The texture module (331) receives the color information (r, g, b) and based thereon generates texture data (T) for at least one synthetic object in the synthetic three-dimensional model (V). The vertex module (332) receives the depth buffer data (Z) and based thereon generates geometry data (G) for each of the at least one synthetic object. The fragment module (333) receives the transparency information (a) and the depth buffer data (Z), and based thereon, generates surface property data (S) for each of the at least one synthetic object.

## Description

### THE BACKGROUND OF THE INVENTION AND PRIOR ART

The present invention relates generally to the production of images by means of a computer. More particularly the invention relates to an apparatus according to the preamble of claim 1 and a corresponding method according to the preamble of claim 7. The invention also relates to a computer program according to claim 11 and a computer readable medium according to claim 12.

Traditionally, three-dimensional computer graphics has been based on triangular models of real objects. If a high resolution is required for such a model (i.e. essentially a high degree of realism), this results in that geometries and surface properties must be calculated for a very large number of triangles. Furthermore, these calculations must be re-made for each refresh of the computer display, which may occur 50 to 100 times per second. Naturally, this places an extensive computing demand on the central processing unit (CPU). Additionally, the data transfer from the CPU to the graphics processing unit (GPU) constitutes a problematic bottleneck. As a result, today's triangular-based rendering of three-dimensional graphics data requires a massive amount of processing power per time unit. In fact, for high-resolution applications based on photographic data, this rendering is not yet at all possible to accomplish in real time. Instead, the rendering must be performed on beforehand. Moreover, when rendering three-dimensional graphics data from a photographic material, a certain amount of manual interaction is normally required. Consequently, a truly realistic real time three-dimensional graphics rendering cannot be accomplished by means of the known solutions.

### SUMMARY OF THE INVENTION

The object of the present invention is therefore to provide an automatic and processing efficient solution, which alleviates the above problems, and thus enables rendering of three-dimensional graphics in real time, which is based on a photographic source.

According to one aspect of the invention the object is achieved by the apparatus for automatically rendering three-dimensional graphics data as initially described, wherein the two-dimensional image data includes depth buffer data, which for each of the image points specifies a distance between a projection plane and a point of a reproduced object in the scene. The apparatus further includes a buffer unit adapted to store the image data, which is directly accessible by the GPU. Preferably, the buffer unit is physically located within, or integrated into, the GPU. The graphics processing unit, in turn, contains a texture module, a vertex module and a fragment module. The texture module is adapted to receive the color information, and based thereon generate texture data for at least one synthetic object in the synthetic three-dimensional model. The vertex module is adapted to receive the depth buffer data, and based thereon generate geometry data for each of the at least one synthetic object. Finally, the fragment module is adapted to receive the transparency information and the depth buffer data. Based on this data, the fragment module generates surface property data for each of the at least one synthetic object.

An important advantage attained by means of this apparatus is that it enables different user views of the synthetic three-dimensional model to be generated very efficiently. Namely, the geometry generated may utilize a distance to the viewer and information about the sizes of different objects to produce as few illustratable primitives as possible. Additionally, by combining image data with surface properties and applying a dynamic lighting, a very high degree of realism can be accomplished, modeling for instance light gleams, reflections and matt surfaces. Moreover, complex geometries may efficiently created by combining objects with one another, such that for example a first object encloses, or is connected with, a second object, and so on.

According to a preferred embodiment of this aspect of the invention, the apparatus includes a super buffer unit, which is adapted to store the surface property data produced in respect of a first rendered image of the synthetic three-dimensional model. Preferably, the super buffer unit is integrated in the buffer unit and the buffer unit, in turn, is co-located with, or integrated in, the graphics processing unit. Namely, thereby both speed- and an accessibility advantages are attained.

According to another preferred embodiment of this aspect of the invention, the vertex module is adapted to read out any surface property data stored in the super buffer unit. Based on the stored surface property data and the depth buffer data, the vertex module then produces geometry data in respect of a refreshed rendered image of the synthetic three-dimensional model. Consequently, after having produced the first rendered image, any refreshed images of the synthetic three-dimensional model of the scene following thereafter can be produced very efficiently.

According to yet another preferred embodiment of this aspect of the invention, the apparatus includes a central processing unit, which is adapted to produce the two-dimensional image data, as well as the color information, the transparency information and the depth buffer data associated there with. This design is advantageous because thereby a complete rendering apparatus is realized.

According to another aspect of the invention, the object is achieved by the method of automatically rendering three-dimensional graphics data as initially described, wherein the two-dimensional image data includes depth buffer data, which for each of the image points specifies a distance between a projection plane and a point of a reproduced object in the scene. Furthermore, producing the synthetic three-dimensional model involves generating texture data for at least one synthetic object in the synthetic three-dimensional model based on the color information; generating geometry data for each of the at least one synthetic object based on the depth buffer data; and generating surface property data for each of the at least one synthetic object based on the geometry, the transparency information and the depth buffer data.

This method is advantageous because thereby different user views of the synthetic three-dimensional model may be generated very efficiently, since the geometry thus produced may utilize a distance to the viewer and information about the sizes of different objects to produce as few illustratable primitives as possible. Moreover, as discussed above with reference to the proposed apparatus, a very high degree of realism may be accomplished and complex geometries may be handled efficiently.

According to a preferred embodiment of this aspect of the invention, it is presumed that the geometry data includes a set of model points which each is associated with a triplet of coordinates. Generating the geometry data then involves determining the coordinate triplet for a model point based on at least one image point that reproduces a corresponding scene point in the two-dimensional image data; a respective depth buffer data value that is specified for each of the at least one image point; and a transform rule, which uniquely defines a projection of the scene point onto the projection plane along a distance designated by the respective depth buffer data value.

According to another preferred embodiment of this aspect of the invention, the three-dimensional graphics data in respect of a first image of the synthetic three-dimensional model is rendered based on the texture data, the geometry data and the surface property data. Then, the surface property data for the first image is stored. Any later rendered three-dimensional graphics data in respect of a refreshed image of the synthetic three-dimensional model is based on the stored surface property data, and the depth buffer data. Hence, after having produced the first rendered image, any refreshed images of the synthetic three-dimensional model of the scene following thereafter can be produced very efficiently.

According to a further aspect of the invention the object is achieved by a computer program, which is directly loadable into the internal memory of a computer, and includes software for controlling the above proposed method when said program is run on a computer.

According to another aspect of the invention the object is achieved by a computer readable medium, having a program recorded thereon, where the program is to control a computer to perform the above proposed method.

The advantages of this program and this computer readable medium, as well as the preferred embodiments thereof, are apparent from the discussion hereinabove with reference to the proposed method.

Further advantages, advantageous features and applications of the present invention will be apparent from the following description and the dependent claims.

### BRIEF DESCRIPTION OF THE DRAWINGS

The present invention is now to be explained more closely by means of preferred embodiments, which are disclosed as examples, and with reference to the attached drawings.
- Figures 1a-b: illustrate a schematic scene photographed from a first direction,
- Figures 1 c-d: illustrate the scene of the figures 1 a-b photographed from a second direction,
- Figure 2: shows a synthetic three-dimensional representation of the scene illustrated in the figures 1 a-d,
- Figure 3: shows a block diagram over an apparatus for automatically rendering three-dimensional graphics data according to one embodiment of the invention, and
- Figure 4: illustrates, by means of a flow diagram, a general method of automatically rendering three-dimensional graphics data according to the invention.

### DESCRIPTION OF PREFERRED EMBODIMENTS OF THE INVENTION

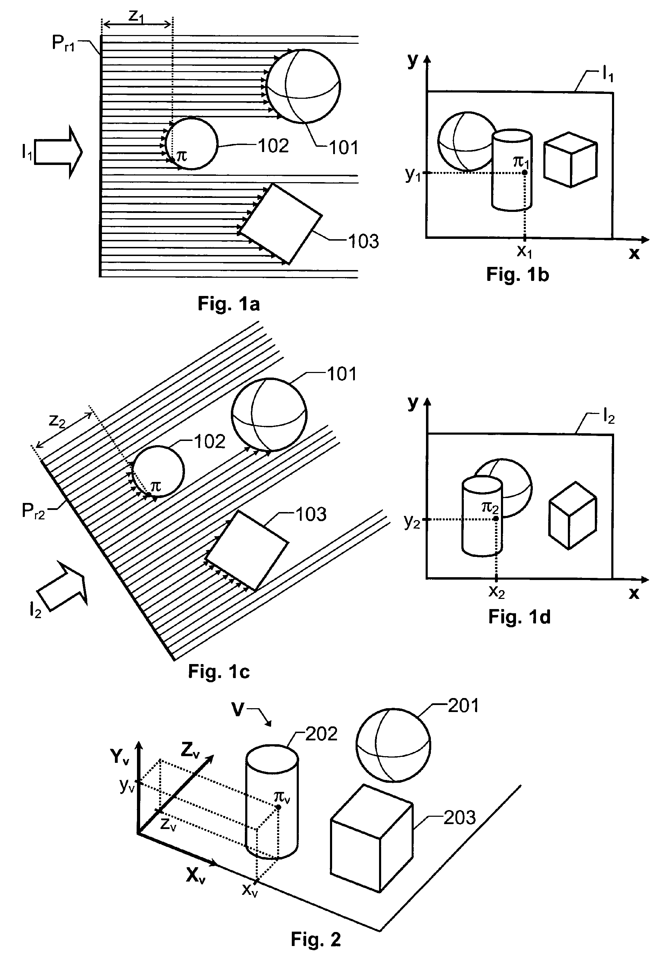

Figure 1a illustrates how a schematic scene is photographed from a first direction I₁ by a projection onto a first projection plane Pᵣ₁. The scene here includes a first object 101, a second object 102 and a third object 103, which are located in space at various distances from one another, for instance spread out on a horizontal plane.

The projection of the scene onto the first projection plane Pᵣ₁ is described by a camera model (or transform rule), and is usually a so-called central projection, i.e. a projection where all light rays converge to a single point. Here, however, for reasons of a simple presentation, the figure 1 a illustrates a parallel projection, where instead the light rays are collimated, and thus arrive perpendicularly at the first projection plane Pᵣ₁. Being two-dimensional, the first projection plane Pᵣ₁ may be described by two linear coordinates x and y (see figure 1b). According to the invention, the two-dimensional image data, i.e. the image points x, y of the first projection plane Pᵣ₁, are associated with depth buffer data which for each of the image points x, y specifies a respective projection distance between the first projection plane Pᵣ₁ and a point of a reproduced object. Particularly, a scene point π on the second object 102 is projected onto an image point π₁ having the two-dimensional coordinates x₁ and y₁ in the first projection plane Pᵣ₁. According to the invention, a projection distance z₁ between the image point π₁ and the scene point π is stored in a depth buffer with a reference to the coordinates x₁, y₁. Additionally, other relevant image data, such as color information and transparency information is stored with reference to the coordinates x₁, y₁. The projection distance z₁ may be calculated by means of various image processing procedures. However, these procedures are not the subject of the present invention, and are therefore not specifically described here.

One projection of the scene onto a first projection plane is sufficient for implementing the invention. Nevertheless, in order to enable rendering of so-called holes, i.e. areas of the scene that are obscured by objects in the scene, for example the portion of the first object 101 which is hidden behind the second object 102 and the surface of the supporting plane between the first and second objects 101 and 102, one or more projections in addition to the first projection are desirable.

Figure 1 c illustrates an alternative projection of the schematic scene of figures 1 a and 1b. Here, the scene is photographed from a second direction I₂, and thereby projected on onto a second projection plane Pᵣ₂. In this projection, the scene point π has the two-dimensional coordinates x₂ and y₂ (see figure 1d). The corresponding depth buffer value is z₂.

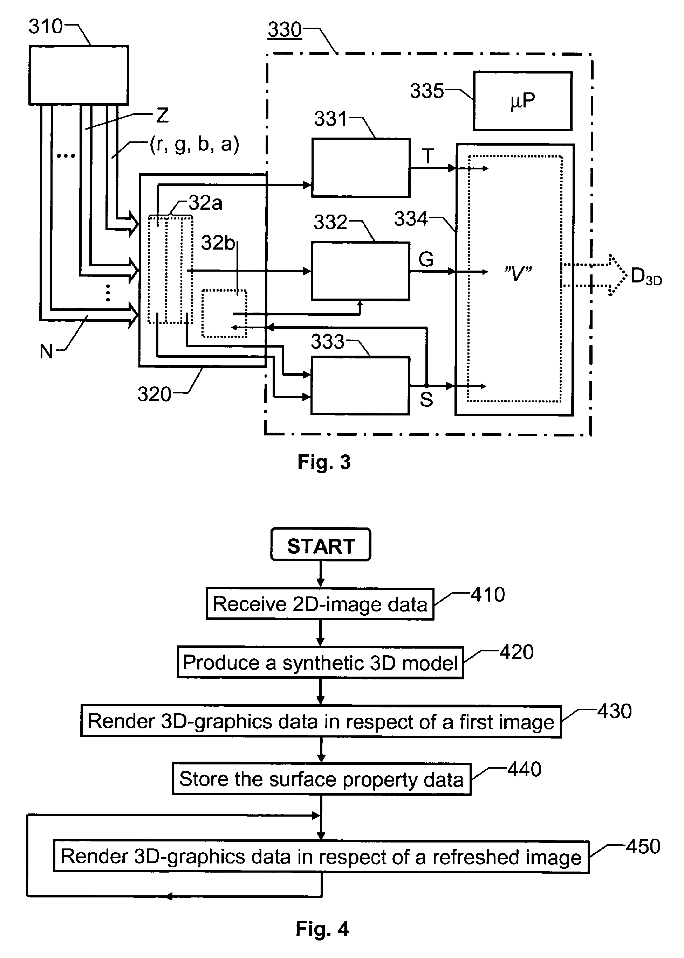

Figure 2 shows a computer generated synthetic three-dimensional model V of the scene discussed above with reference to the figures 1 a to 1 d. The model V is based on the two-dimensional image data obtained from the projections onto the first and second projection planes Pᵣ₁ and Pᵣ₂ respectively. In the model V, each model point is associated with a triplet of coordinates x, y, z that describe the point's location in space. Particularly, the scene point π is represented by a model point πᵥ, which is associated with a triplet of coordinates xᵥ, yᵥ, zᵥ. Based on the three-dimensional coordinates x, y, z, geometry data may be generated that reflects different user views of the synthetic three-dimensional model V. Of course, surface properties also need to be considered in order to render realistic computer graphics. The principles behind this and other features of the invention will be discussed below with reference to the figures 3 and 4.

Figure 3 shows a block diagram over an apparatus for automatically rendering three-dimensional graphics data according to one embodiment of the invention. The apparatus includes a GPU 330, which is adapted to receive two-dimensional image data that contains a number of image points, where each image point is associated with color information r, g, b (typically designating red-, green- and blue components), transparency information a (indicating how translucent an object is), and depth buffer data Z. As mentioned above, the depth buffer data Z, specifies a projection distance between a relevant projection plane and a point of a reproduced object in the scene.

According to one embodiment of the invention, the apparatus includes a CPU 310, which produces the two-dimensional image data along with the color information r, g, b, transparency information a, and the depth buffer data Z associated there with.

The apparatus includes a buffer unit 320 for storing the two-dimensional image data. For instance, the buffer unit 320 may contain a sub-buffer unit 32a, where the image data can be stored in an array format. The buffer unit 320 is directly accessible by the GPU 330 in order to enable a fast GPU access to the data contained therein. In practice, this means that the buffer unit 320 preferably is physically located within the GPU 330, or integrated with this unit. Moreover, the buffer unit 320 is preferably co-located with the graphics processing unit 330.

In any case, the GPU unit 330 includes a texture module 331, a vertex module 332, and a fragment module 333. The texture module 331 receives the color information r, g, b, and based thereon generates texture data T for at least one synthetic object in the synthetic three-dimensional model V. The vertex module 332 receives the depth buffer data Z, and based thereon generates geometry data G for each of the at least one synthetic object. The fragment module 333 receives the transparency information a and the depth buffer data Z, and based thereon generates surface property data S for each of the at least one synthetic object. Naturally, the surface property data S is determined by the object's transparency and any other surface properties. However, also factors such as the positions and power of simulated light sources and the distance to the viewer influence the surface property data S.

According to a preferred embodiment of the invention, the apparatus includes a super buffer unit 32b, which is adapted to store (preferably in the form of so-called vertex buffer objects) the surface property data S that is produced in respect of a first rendered image of the synthetic three-dimensional model V.

As a result, the vertex module 332 may read out surface property data S stored in the super buffer unit 32b. Then, the vertex module 332 can produce geometry data G in respect of a refreshed rendered image of the synthetic three-dimensional model V based on the stored surface property data S and the depth buffer data Z from the sub-buffer unit 32a.

Preferably, the super buffer unit 32b is integrated in the buffer unit 320. This is namely advantageous both with respect to cost and speed.

In order to sum up, the general method of automatically rendering three-dimensional graphics data according to the invention and its preferred embodiments will now be described with reference to figure 4.

A first step 410 receives two-dimensional image data that contains a number of image points, which each is associated with color information, transparency information and depth buffer data specifying a projection distance between a projection plane and a point of a reproduced object.

Then, a step 420 produces a synthetic three-dimensional model of a scene represented by the image data based on the two-dimensional image data. Producing this model involves generating texture data for at least one synthetic object based on the color information; generating geometry data for each of the at least one synthetic object based on the depth buffer data; and generating surface property data for each of the at least one synthetic object based on the geometry data, the transparency information and the depth buffer data.

Subsequently, a step 430 renders three-dimensional graphics data in respect of a first image on the basis of the synthetic three-dimensional model, i.e. the texture data, the geometry data and the surface property data produced in the step 420. After that, a step 440 stores the surface property data S for the first image, for instance in a super buffer unit as described above.

Finally, a step 450 renders three-dimensional graphics data in respect of a refreshed image of the synthetic three-dimensional model based on the stored surface property data, and the depth buffer data. The refreshed image is typically generated upon a user view change with respect to the synthetic three-dimensional model. However, other refresh occasions are conceivable, such as when a new object is introduced in the scene.

In any case, the procedure stays in the step 450, where refreshed images are produced iteratively, until either the scene is altered, or the rendering process is discontinued.

All of the process steps, as well as any sub-sequence of steps, described with reference to the figure 4 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. An apparatus for automatically rendering three-dimensional graphics data (D_{3D}), the apparatus comprising a graphics processing unit (330) adapted to receive two-dimensional image data containing a number of image points (x₁, y₁; x₂, y₂) which each is associated with at least color information (r, g, b) and transparency information (a), the apparatus being adapted to, based on the two-dimensional image data, produce a synthetic three-dimensional model (V) of a scene represented by the two-dimensional image data, **characterized in that** the two-dimensional image data includes depth buffer data (Z) which for each of the image points (x₁, y₁; x₂, y₂) specifies a distance (z₁; z₂) between a projection plane (Pᵣ₁, Pᵣ₂) and a point of a reproduced object (101, 102, 103) in the scene, and the apparatus further comprises
a buffer unit (320) adapted to store the two-dimensional image data which is directly accessible by the graphics processing unit (330), the graphics processing unit (330) in turn comprises
a texture module (331) adapted to receive the color information (r, g, b) and based thereon generate texture data (T) for at least one synthetic object (201, 202, 203) in the synthetic three-dimensional model (V),
a vertex module (332) adapted to receive the depth buffer data (Z) and based thereon generate geometry data (G) for each of the at least one synthetic object (201, 202, 203), and
a fragment module (333) adapted to receive the transparency information (a) and the depth buffer data (Z), and based thereon, generate surface property data (S) for each of the at least one synthetic object (201, 202, 203).

2. An apparatus according to claim 1, **characterized in that** it comprises a super buffer unit (32b) adapted to store the surface property data (S) produced in respect of a first rendered image of the synthetic three-dimensional model (V).

3. An apparatus according to claim 2, **characterized in that** the super buffer unit (32b) is integrated in the buffer unit (320).

4. An apparatus according to any one of the claims 2 or 3,
**characterized in that** the buffer unit (320) is co-located with the graphics processing unit (330).

5. An apparatus according to any one of the claims 2 to 4,
**characterized in that** the vertex module (332) is adapted to
read out surface property data (S) stored in the super buffer unit (32b), and
produce geometry data (G) in respect of a refreshed rendered image of the synthetic three-dimensional model (V) based on the stored surface property data (S), and the depth buffer data (Z).

6. An apparatus according to any one of the preceding claims, **characterized in that** the apparatus comprises a central processing unit (310) adapted to produce the two-dimensional image data, the information color information (r, g, b) and transparency information (a) associated there with, and the specified depth buffer data (Z).

7. A method of automatically rendering three-dimensional graphics data (D_{3D}), the method comprising:
receiving two-dimensional image data containing a number of image points (x₁, y₁; x₂, y₂) which each is associated with color information (r, g, b) and transparency information (a) respectively, and
producing, based on the two-dimensional image data, a synthetic three-dimensional model (V) of a scene represented by the image data,
**characterized by** the two-dimensional image data including depth buffer data (Z) which for each of the image points (x₁, y₁; x₂, y₂) specifies a distance (z₁; z₂) between a projection plane (Pᵣ₁, Pᵣ₂) and a point (π₁; π₂) of a reproduced object (101, 102, 103) in the scene, said producing step involving
generating texture data (T) for at least one synthetic object (201, 202, 203) in the synthetic three-dimensional model (V) based on the color information (r, g, b),
generating geometry data (G) for each of the at least one synthetic object (201, 202, 203) based on the depth buffer data (Z), and
generating surface property data (S) for each of the at least one synthetic object (201, 202, 203) based on the geometry (G), the transparency information (a) and the depth buffer data (Z).

8. A method according to claim 7, **characterized by** the geometry data (G) comprising a set of model points (πᵥ) in the synthetic three-dimensional model (V), each model point (πᵥ) being associated with a triplet of coordinates (xᵥ, yᵥ, zᵥ), the generation of the geometry data (G) involving determining the triplet of coordinates (xᵥ, yᵥ, zᵥ) for a model point (πᵥ) based on:
at least one image point (x₁, y₁; x₂, y₂) reproducing a corresponding scene point (π) in the two-dimensional image data;
a respective depth buffer data value (z₁; z₂) specified for each of the at least one image point (x₁, y₁; x₂, y₂); and
a transform rule uniquely defining a projection of the scene point (π) onto the projection plane (Pᵣ₁, Pᵣ₂) along a distance designated by the respective depth buffer data value (z₁; z₂).

9. A method according to any one of the claims 7 or 8, **characterized by** rendering three-dimensional graphics data (D_{3D}) in respect of a first image of the synthetic three-dimensional model (V) based on the texture data (T), the geometry data (G) and the surface property data (S).

10. A method according to claim 9, **characterized by** the steps of: storing the surface property data (S) for the first image; and subsequently
rendering three-dimensional graphics data (D_{3D}) in respect of a refreshed image of the synthetic three-dimensional model (V) based on:
the stored surface property data (S), and
the depth buffer data (Z).

11. A computer program directly loadable into the internal memory of a computer, comprising software for controlling the steps of the claims 7 to 10 when said program is run on the computer.

12. A computer readable medium (115), having a program recorded thereon, where the program is to make a computer control the steps of the claims 7 to 10.
